# EUROPÄISCHE PATENTSCHRIFT

(11) **EP 2 732 228 B1**
(45) Veröffentlichungstag und Bekanntmachung des Hinweises auf die Patenterteilung: **28.02.2018**
(21) Anmeldenummer: 12753045.9
(22) Anmeldetag: 11.07.2012
(51) Int. Cl.: F27B 1/00, C04B 20/06

(54) **SCHACHTOFEN FÜR DAS HITZEBEDINGTE AUFSCHÄUMEN VON PARTIKELN EINES SCHÜTTGUTES**
SHAFT FURNACE FOR THE HEAT-INDUCED FOAMING OF PARTICLES OF A BULK MATERIAL
FOUR À CUVE POUR LE MOUSSAGE PROVOQUÉ PAR LA CHALEUR DE PARTICULES D'UN PRODUIT EN VRAC

(30) Priorität: 13.07.2011 AT 10252011
(43) Veröffentlichungstag der Anmeldung: 21.05.2014
(73) Patentinhaber: Binder + Co AG, 8200 Gleisdorf (AT)
(72) Erfinder: Wustinger, Horst, Deceased (AT)
(74) Vertreter: KLIMENT & HENHAPEL
(86) Internationale Anmeldenummer: PCT/AT2012/000183
(87) Internationale Veröffentlichungsnummer: WO 2013/006875

(56) Entgegenhaltungen:
- EP-A2- 0 353 860
- DE-A1- 1 646 560

## Beschreibung

Mit "Schüttgut" ist in diesem Sinne eine Ansammlung von festen, nicht miteinander verbunden Partikeln gemeint, wobei die einzelnen Partikel im Verhältnis zur Gesamtmenge klein sind. Ein sehr wichtiger Anwendungsfall ist die Herstellung eines Schüttgutes mit geringer Dichte und hoher Wärmeisolationsfähigkeit durch Aufschäumen von Partikeln eines Granulates aus einem mineralischen Material wie beispielsweise Perlit oder Pechstein. Diese weisen einen hohen Anteil an netzwerkbildendem ("glasbildendem") Material - bei den genannten Beispielen SiO₂ - sowie eine nennenswerten Anteil an eingeschlossenem Kristallwasser auf. Bei "normaler Temperatur" sind diese Partikel feste Steinchen. Bei Temperaturen über etwa 700°C werden die netzwerkbildenden Materialanteile teigig weich; das eingeschlossene Kristallwasser verdampft und bläht das teigige Material auf. Mit dem Abkühlen verfestigen die Partikel wieder und haben den einen hohen Volumenanteil an Poren. Idealerweise werden dabei Kügelchen mit gleichmäßigem geringem spezifischen Gewicht und glasartiger, geschlossen erscheinender Oberfläche gebildet.
Die Schriften DE 32 29 995 C1, DE 21 30 194 A1 und GB 2112770 A zeigen Schachtöfen für das Aufschäumen von Perlite wobei der Ofenschacht beheizt wird indem eine Flame von dessen Grundfläche aus nach oben brennt und wobei aufzuschäumendes Schüttgut in den unteren Teil des Ofenschachtes eingegeben wird. Die durch die Hitzeeinwirkung aufgeschäumten Partikel werden mit den Feuerungsabgasen aus dem oberen Teil des Ofens abgesaugt. Typischerweise mittels eines Zyklonabscheiders werden Feuerungsabgase und aufgeschäumte Partikel voneinander getrennt. Gemäß der GB 2112770 A wird das aufzuschäumende Schüttgut durch die Mitte der Grundfläche des Ofenschachtes zugeführt. Die Zufuhrstelle ist umgeben von Brennerdüsen für die Befeuerung des Ofenschachtes. Nachteilig an dieser Bauart sind die mangelhaften Einstellbarkeit und Reproduzierbarkeit der Eigenschaften des damit herstellbaren Schüttgutes und dass sich nicht aufschäumbare Materialanteile im Ofenschacht ansammeln.

Die DE 32 38 974 A1 zeigt einen Schachtofen für das Aufschäumen von Schüttgut aus Perlitepartikeln, wobei der Ofenschacht beheizt wird, indem eine Flamme von der Mitte von dessen Deckfläche her in den Ofenschacht brennt. Das aufzuschäumende Schüttgut wird ebenfalls durch die Deckfläche in den Ofenschacht eingebracht, und zwar durch mehrere, typischerweise 45° geneigte Kanäle, durch welche das Schüttgut sternförmig auf die Mitte des Ofenschachtes zu rieselt, in welcher auch die Flamme brennt. Das Rieseln des Schüttgutes wird durch steuerbar strömende Pressluft, welche ebenfalls durch die die geneigten Kanäle strömt unterstützt und bezüglich der Masse pro Zeit einstellbar. Verbrennungsgase, aufgeschäumte Partikel und ggf. mitgeführte Luft strömen durch die als Trichter ausgebildete untere Stirnseite des Ofenschachtes aus diesem heraus. Verbrennungsabgase und Partikel werden durch Abscheider voneinander getrennt. Wärme des Verbrennungsabgases wird dazu verwendet, das noch aufzuschäumende Schüttgut vor dem Eintritt in den Ofenschacht vorzuwärmen.
Auch die US 3627285 A und die US 3732071 A zeigen Schachtöfen für das Aufschäumen eines Schüttgutes aus Perlitepartikeln, wobei die aufzuschäumenden Partikel durch eine Öffnung an der oberen Stirnseite des Ofenschachtes in den Ofenschacht eingegeben werden, wobei der Ofenschacht durch eine in diesen mündende Feuerung direkt beheizt wird und wobei aufgeschäumte Partikel und Feuerungsabgase den Ofenschacht durch dessen untere Stirnseite verlassen. Bei den beiden letztgenannten Schriften erfolgt die Befeuerung durch mehrere Flammen, welche durch Düsen in der Mantelfläche des Ofenschachtes in diesen münden. Damit kann gegenüber der Befeuerung von der der oberen Stirnseite des Ofenschachtes her der Temperaturverlauf über die Höhe des Ofenschachtes besser eingestellt werden. Nachteilig an allen Bauweisen mit durch Flammen direkt beheizten Ofenschächten ist, dass das aufzuschäumende Gut mit den Flammen direkt in Kontakt kommt und damit Verbrennungsrückstände aufnimmt, dass durch die Flammen Turbulenzen der Strömung entstehen, wodurch teigiges Material an die Schachtwand gelangt und dort kleben bleibt, und dass die Steuerbarkeit des Temperaturverlaufs über die Höhe des Ofenschachtes immer noch schwierig ist.

Die CN 201158620 Y, die WO 2009/009817 A1, die AT 504051 A1 und die EP 353860 A2 zeigen Schachtöfen für das Aufschäumen eines Schüttgutes aus Perlitepartikeln wobei der Schachtofen einen zentralen vertikalen Ofenschacht aufweist der durch die aufzuschäumenden Partikel von oben nach unten durchströmt wird und welcher durch eine entlang seiner Höhe verlaufende, außerhalb seiner Mantelfläche angeordnete Heizquelle beheizt wird. Damit ist gegenüber den zuvor genannten Bauweisen bessere Einstellbarkeit und Reproduzierbarkeit der Eigenschaften der aufgeschäumten Partikel erreichbar, weil zusätzlich zu dem Umstand dass der Temperaturverlauf über die Höhe des Ofenschachtes gut stabil einstellbar ist, die Partikel nicht mit Feuerungsabgasen in Kontakt kommen.
Gemäß der AT 504051 A1 wird mittels eines am unteren Auslass des Ofenschachtes angeordneten Injektors Luft von oben nach unten durch den Ofenschacht gesaugt, welche mit dem Schüttgut durch die obere Stirnseite des Ofenschachtes in diesen einströmt.
Gemäß der EP 353860 A2 wird mit dem aufzuschäumenden Schüttgut auch Luft an der oberen Stirnseite des Ofenschachtes zugeführt, indem in das Rohr, durch welches Schüttgut zugeführt wird auch ein Rohr einmündet, durch welches Luft eingeblasen wird.
Gemäß einer bevorzugten Ausführung entsprechend der WO 2009/009817 A1 ist die Querschnittsfläche des Ofenschachtes flach rechteckig, die Mantelfläche des Ofenschachtes ist aus Glaskeramik ausgeführt und die Beheizung des Volumens des Ofenschachtes erfolgt vorwiegend durch Wärmestrahlung, welche von der außerhalb der Mantelfläche des Ofenschachtes angeordneten Heizquelle erzeugt wird und durch die Glaskeramik durchdringt. Damit ist eine sehr schnelle Steuerbarkeit der Hitzeeinwirkung auf das aufzuschäumende Granulat erreichbar.
Bei den beschriebenen Bauformen mit außerhalb der Mantelfläche des Ofenschachtes angeordneter Heizquelle bleibt das Problem bestehen, dass der Ofenschacht während des Betriebes durch aufgeheizte teigige Partikel des Schüttgutes, welche sich an den Schachtwänden anlegen, langsam zuwächst. In der EP 353860 A2 wird dazu als Abhilfemaßnahme vorgeschlagen mit einem pneumatisch angetrieben Hammer auf die als metallisches Rohr ausgebildete Mantelfläche des Ofenschachtes zu schlagen um durch die Erschütterung das aufgetragene Material abzulösen. Bei den anderen der genannten Bauweisen behilft man sich durch aufwendige manuelle Wartungsarbeiten.

Die der Erfindung zu Grunde liegende Aufgabenstellung besteht darin, einen Schachtofen für das hitzebedingte Aufschäumen der Partikel eines Schüttgutes bereitzustellen, bei welchem die Eigenschaften der aufgeschäumten Partikel so fein und reproduzierbar einstellbar sind wie bei den diesbezüglich besten Schachtöfen. Gegenüber diesen bekannten Schachtöfen soll das Anhaften von Material an der Innenseite der Mantelfläche des Ofenschachtes besser vermieden werden.

Zum Erfüllen der Aufgabe wird von jener Bau- und Betriebsweise eines Schachtofens ausgegangen, bei welchem die aufzuschäumenden Partikel durch dessen obere Stirnfläche in den Ofenschacht gelangen und diesen von oben nach unten durchströmen und dabei erhitzt und aufgeschäumt werden, wobei die Beheizung des Ofenschachtes durch außerhalb der Mantelfläche des Ofenschachtes entlang dieser angeordneter Heizquellen erfolgt und wobei zusätzlich mit dem Strom von aufzuschäumenden Partikeln auch Gas von oben nach unten durch den Ofenschacht strömt.

Als erfindungsgemäße Verbesserung wird vorgeschlagen die aufzuschäumenden Partikel des Schüttgutes und das oben in den Ofenschacht zuzuführende Gas durch getrennte Öffnungen in den Ofenschacht zuzuführen, wobei die Öffnungen für die Zuführung der aufzuschäumenden Partikel weiter von der Mantelfläche des Ofenschachtes entfernt liegen als die Öffnungen für die Zuführung des Gases.
In einer besonders bevorzugten Ausführungsform ist das zugeführte Gas schon zumindest annähernd auf die im Ofenschacht herrschende Maximaltemperatur erhitzt, wenn es in den Ofenschacht einströmt.

Durch die genannten Maßnahmen wird erreicht, dass der Strom aus aufzuschäumenden Partikel im Ofenschacht mehr als bei den vorbekannten Bauweisen im mittleren Querschnittsflächenbereich fokussiert bleibt und dass sich im Ofenschacht weniger oder gar keine Wirbel von strömendem Gas bilden, in denen ansonsten besonders die kleinsten und leichtesten der Partikel aus aufzuschäumenden Material im Ofenschacht so lange kreisen und dabei immer mehr verflüssigen, bis sie schließlich mit der Mantelfläche des Ofenschachtes in Kontakt kommen und an dieser haften bleiben.

In einer bevorzugten Ausführungsform weist die Mantelfläche des Ofenschachtes über ihre Fläche verteilt zusätzlich viele kleine Öffnungen auf, durch welche vorerhitztes Gas in den Ofenschacht strömt. Damit ergibt sich im Ofenschacht eine Strömung von der Mantelfläche weg, womit die Gefahr weiter verringert wird, dass klebrige Partikel an die Mantelfläche gelangen.

In einer weiter bevorzugten Ausführungsform ist die Mantelfläche des Ofenschachtes aus mehreren Teilflächen aus Glaskeramik gebildet und Öffnungen der Mantelfläche verlaufen entlang Stoßflächen zwischen benachbarten derartigen Teilflächen. Diese Bauweise ist besonders effizient, einfach herstellbar und robust.
Die Erfindung wird an Hand einer Zeichnung veranschaulicht:

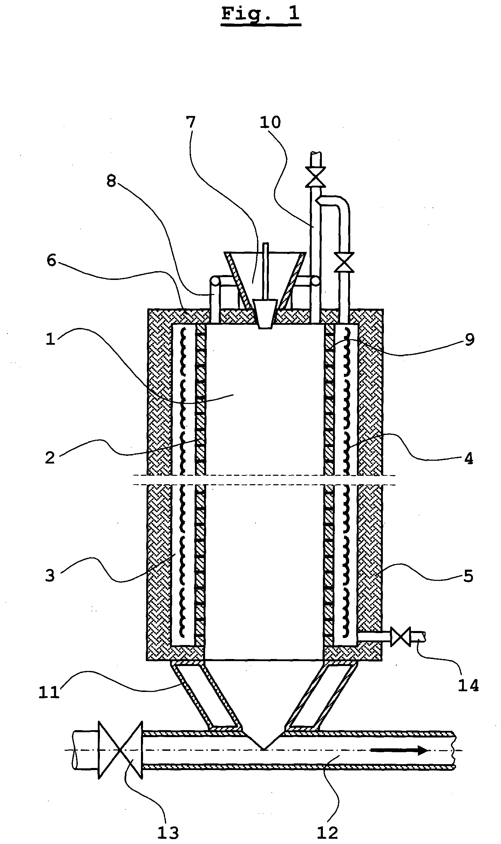

- Fig. 1:: zeigt in einer stilisierten, nicht maßstäblichen Darstellung für das Verständnis wichtige Teile eines beispielhaften erfindungsgemäßen Schachtofens in seitlicher Teilschnittansicht.

Im Beispiel gemäß Fig. 1 wird der Ofenschacht 1, in welchem bestimmungsgemäß das Aufschäumen von Partikeln stattfindet, seitlich durch eine Mantelfläche 2 begrenzt, welche beispielsweise durch ein Stahlrohr oder durch mehrere Flächen aus Glaskeramik gebildet sein kann. Die Mantelfläche 2 wird radial durch einen Ringspalt 3 umschlossen, in welchem sich Heizelemente 4 befinden. Der Ringspalt 3 wird durch eine isolierende Wand 5 umschlossen. Oben sind der Ofenschacht 1 und der Ringspalt 3 durch eine obere Stirnfläche 6, welche auch aus einem wärmeisolierenden Material bestehen sollte, abgedeckt. Die offene untere Stirnfläche des Ofenschachtes 1 mündet in einen Trichter 11 mit gekühlter Mantelfläche. Der Trichter mündet mit seiner unteren, kleineren Öffnung in ein Rohr 12.

Im Betriebszustand ist der Ofenschacht 1 zufolge der Heizelemente 4, welche über die Mantelfläche 2 auf ihn einwirken, auf eine Temperatur oberhalb jener Temperatur erhitzt, bei welcher das Material der bestimmungsgemäß aufzuschäumenden Partikel erweicht, sodass es teigig oder zähflüssig wird und zufolge Druck von enthaltenen verdampfenden Substanzen - typischerweise Wasser - aufbläht.
Das Schüttgut aus aufzublähenden Partikeln ist im Trichter 7 an der Oberseite der oberen Stirnfläche 6 angeordnet. Es rieselt durch einen kegelstumpfmantelförmigen Ringspalt, dessen Stärke durch einen beweglichen, kegelstumpfförmigen Verschlussteil einstellbar ist, von oben in den Ofenschacht 1 und fällt in diesem nach unten, wobei es erhitzt und aufgebläht wird.
Am seinem unteren Ende verjüngt sich der Ofenschacht 1 zu einem Trichter 11, welcher eine gekühlte Mantelfläche aufweisen kann und mündet schließlich in eine Rohrleitung 12. Die von oben kommenden, inzwischen aufgeschäumten ober noch heißen und teigigen Partikel schlagen im Allgemeinen nicht auf den Trichter 11 auf, sondern fallen direkt in die wegführende Rohrleitung 12, und werden durch den darin fließenden relativ kühlen Luftstrom gekühlt und damit verfestigt. Die Partikel schlagen deswegen nicht auf den Trichter 11 auf, weil sie durch die im Ofenschacht 1 erzwungene Gasführung tendenziell eher in der Schachtmitte fallen als an den Schachtwänden und weil das im Ofenschacht 1 erzwungenermaßen nach unten strömende Gas im Bereich des durch die Trichterwände verengten Fließquerschnitts mit relativ hoher Geschwindigkeit etwa parallel zu den Trichterwänden zu der Öffnung zu der Rohrleitung 12 hin fließt und dabei die dort schon schaumig leichten Partikel in die Rohrleitung 12 mitreißt bevor diese die Trichterwände berühren können. Es ist vorteilhaft, die Gasströmung durch den Ofenschacht 1 so stark einzustellen, dass wirklich keine oder nur extrem wenige Partikel an die Wände des Trichters 11 gelangen, da diese Partikel ansonsten dort festkleben und alsbald einen stark störenden Kuchen aufbauen der in mühsamen und häufigen Wartungsarbeiten wieder abgetragen werden muss.
Die Rohrleitung 12 ist mit einer Gasströmung beaufschlagt, durch welche die Partikel gekühlt und damit verfestigt werden und dann über einen Abscheider oder einen Filter in ein Speicherbehältnis bewegt werden. Die Gasströmung wird durch eine von der Einmündungsstelle des Trichters 11 stromabwärts gelegene - nicht dargestellte - Saugvorrichtung, beispielsweise ein Lüfterrad, erzeugt. Bevorzugt ist die Saugvorrichtung auch stromabwärts des Abscheiders bzw. Filters für das Abtrennen von aufgeschäumten Partikeln aus dem Fördergasstrom angeordnet.
Stromaufwärts von der Mündung des Trichters 11 in die wegführende Leitung 12 ist ein Ventil 13 in der Leitung 12 angeordnet. Je nachdem, wie sehr dieses Ventil 13 geöffnet oder geschlossen ist, fließt weniger oder mehr Gasstrom aus dem Ofenschacht 1 heraus oder durch das Ventil 13 in die Leitung 12. In den Ofenschacht 1 hinein fließt ein Gasstrom durch kranzartig um den Zufuhrtrichter 7 angeordnete Zufuhrleitungen 8, welche durch die obere Stirnfläche 6 hindurchführen und durch eine gemeinsame Leitung 10 gespeist werden, welche in Abhängigkeit von den Ventilstellungen an für sie zuführenden Leitungen mehr oder minder aus dem beheizten Ringspalt 3 oder aus einer anderen Quelle gespeist wird.

Vom Ringspalt 3 fließt beheiztes Gas auch direkt durch die Mantelfläche 2 des Ofenschachtes 1 in den Ofenschacht 1. Indem mittels eines Ventils in einer Gaszufuhr 14 zum Ringspalt 3 eingestellt wird, wie viel Gas in den Ringspalt nachströmen kann, wird auch einstellbar, wie viel Gas durch die Öffnungen 9 vom Ringspalt 3 in den Ofenschacht 1 fließt.
Die im Ringspalt 3 angeordneten Heizelemente 4 erhitzen das im Ringspalt 3 enthaltene Gas, sodass das von Ringspalt 3 in den Ofenschacht fließende Gas schon mindestens etwa auf die Erweichungstemperatur des aufzuschäumenden Materials erhitzt ist. Indem dieses Gas somit etwa gleiche Temperatur wie das schon im Ofenschacht befindliche Gas hat, ruft es im Ofenschacht 1 so gut wie keine turbulenten Strömungen hervor, welche die Gefahr erhöhen würden, dass aufzuschäumende Partikel an die Mantelfläche 2 gelangen.

Natürlich kann man im Rahmen des Erfindungsgedankens das Volumen der verschiedenen Gasströmungen auch in anderer Weise als mittels der dargestellten Ventile einstellen.

Die optimale Größe der einzelnen Gasströmungen bzw. die optimalen Ventileinstellungen sind im Rahmen des fachmännischen Handelns gut durch Näherungsüberlegungen und Versuche zu ermitteln, weswegen hier nicht weiter darauf eingegangen wird.

Indem gegenüber Vorrichtungen aus dem Stand der Technik der Gasdurchsatz durch den Ofenschacht 1 erhöht ist, ist für die gleiche Menge an aufzuschäumendem Schüttgut auch der Bedarf an Wärmeenergie, welche dem Ofenschacht 1 zuzuführen ist, erhöht. Der Wert des Vorteils, dass beim erfindungsgemäßen Schachtofen kein Verkleben von aufzuschäumendem Material mit der Mantelfläche 2 und mit der Trichterfläche 11 stattfindet, übersteigt bei üblichen Preisen je Kilowattstunde die Kosten der zusätzlich erforderlichen Energie bei weitem.
Natürlich ist es sinnvoll und technisch problemlos machbar, Abwärme aus dem Gasstrom in der wegführenden Leitung 12 wieder für das Erwärmen des Ofenschachtes oder anderweitig sinnvoll zu nutzen, sodass diese Wärmeenergie nicht verloren ist.

Das durch den Ofenschacht 1 den Ringspalt 3 und die diversen Leitungen strömende Gas ist im Normalfall mehr oder minder stark erhitzte Luft aus der Umgebung. Natürlich kann es für mache speziellen Materialien sinnvoll sein stattdessen ein spezielleres, typischerweise ein inertes Gas zu verwenden.

## Patentansprüche

1. Schachtofen für das hitzebedingte Aufschäumen von Partikeln eines Schüttgutes, wobei die aufzuschäumenden Partikel durch dessen obere stirnfläche (6) in den Ofenschacht (1) gelangen, diesen von oben nach unten durchströmen und dabei erhitzt und ausgeschäumt werden, wobei die Beheizung des Ofenschachtes (1) durch außerhalb der Mantelfläche (2) des Ofenschachtes (1) entlang dieser angeordneter Heizquellen (4) erfolgt und wobei zwecks Vermeidung von Anhaftungen im Ofenschacht (1) zusätzlich mit dem Strom von aufzuschäumenden Partikeln auch ein Gasstrom, welcher die obere Stirnfläche (6) durchtritt, von oben nach unten durch den Ofenschacht (1) erswingbar ist,
**dadurch gekennzeichnet, dass**
für das Zuführen der aufzuschäumenden Partikel des Schüttgutes und das Einfließen von Gas in den oberen Teil des Ofenschachtes (1) getrennte Zuführungen in der oberen Stirnfläche (6) des Ofenschachtes (1) vorhanden sind, wobei die öffnungen für die Zuführung der aufzuschäumenden Partikel weiter von der Mantelfläche (2) des Ofenschachtes (1) entfernt liegen als die Öffnungen (8) für die Zuführung des Gases.

2. Schachtofen nach Anspruch 1, **dadurch gekennzeichnet, dass** das in den oberen Teil des Ofenschachtes (1) zugeführte Gas - gemessen in °C - auf mindestens 50% der im Ofenschacht (1) herrschenden Maximaltemperatur erhitzt ist.

3. Schachtofen nach Anspruch 1 oder Anspruch 2, **dadurch gekennzeichnet, dass** mehrere Öffnungen (8) für die Zuführung des Gases an der oberen Stirnfläche (6) des Ofenschachtes (1) entlang der Kante zu der Mantelfläche (2) des Ofenschachtes um eine Öffnung für die Zuführung von aufzuschäumenden Partikeln herum angeordnet sind.

4. Schachtofen nach einem der Ansprüche 1 bis 3, **dadurch gekennzeichnet, dass** die Mantelfläche (2) des Ofenschachtes (1) über ihre Fläche verteilt viele kleine Öffnungen (9) aufweist, durch welche der Ofenschacht (1) mit einem Ringspalt (3) in Strömungsverbindung ist, in welchem die Heizquellen (4) angeordnet sind und dass im Ringspalt (3) ein höherer Druck herrscht als im Ofenschacht (1).

5. Schachtofen nach Anspruch 4, **dadurch gekennzeichnet, dass** die Mantelfläche (2) des Ofenschachtes (1) aus mehreren Teilflächen aus Glaskeramik gebildet ist und dass die Öffnungen (9) der Mantelfläche entlang Stoßflächen zwischen benachbarten derartigen Teilflächen verlaufen.

6. Schachtofen nach einem der Ansprüche 1 bis 5, **dadurch gekennzeichnet, dass** die offene untere Stirnseite des Ofenschachtes (1) in eine Leitung (12) mündet, welche mit Saugdruck beaufschlagt ist.

## Claims

1. A shaft furnace for the heat-induced foaming of particles of a bulk material, wherein the particles to be foamed pass into the furnace shaft (1) through the upper end face (6) thereof, flow through said shaft from top to bottom and are thereby heated and foamed, wherein the heating of the furnace shaft (1) is performed by heat sources (4) arranged outside and along the jacket surface (2) of the furnace shaft (1), and wherein, in order to avoid deposits in the furnace shaft (1) and in addition to the flow of particles to be foamed, a gas stream which passes through the upper end face (6) can be forced from top to bottom through the furnace shaft (1), **characterized in that** for feeding the particles of the bulk material to be foamed and the inflow of gas into the upper part of the furnace shaft (1) separate feeds are provided in the upper end face (6) of the furnace shaft (1), wherein the openings for feeding the particles to be foamed lie further away from the jacket surface (2) of the furnace shaft (1) than the openings (8) for the feeding of the gas.

2. A shaft furnace according to claim 1, **characterized in that** the gas fed into the upper part of the furnace shaft (1) - measured in °C - is heated to at least 50% of the maximum temperature prevailing in the furnace shaft (1).

3. A shaft furnace according to claim 1 or claim 2, **characterized in that** a plurality of openings (8) for feeding gas is arranged on the upper end face (6) of the furnace shaft (1) along the edge to the jacket surface (2) of the furnace shaft around an opening for feeding particles to be foamed.

4. A shaft furnace according to one of the claims 1 to 3, **characterized in that** the jacket surface (2) of the furnace shaft (1) has many small openings (9) distributed over its surface, through which the furnace shaft (1) is in flow communication with an annular gap (3), in which the heat sources (4) are arranged, and **in that** there is a higher pressure in the annular gap (3) than in the furnace shaft (1).

5. A shaft furnace according to claim 4, **characterized in that** the jacket surface (2) of the furnace shaft (1) is formed of several partial surfaces of glass ceramic, and that the openings (9) of the jacket surface extend along abutting surfaces between adjacent such partial surfaces.

6. A shaft furnace according to one of the claims 1 to 5, **characterized in that** the open lower end face of the furnace shaft (1) opens into a conduit (12) which is supplied with a suction pressure.

## Revendications

1. Four à cuve pour le moussage provoqué par la chaleur de particules d'un produit en vrac, les particules à mousser parvenant dans la cuve de four (1), par sa surface frontale supérieure (6), traversant ladite cuve de haut en bas et étant ce faisant chauffées et moussées, le chauffage de la cuve de four (1) s'effectuant au moyen de sources de chaleur (4) disposées à l'extérieur de la surface (2) de la cuve de four (1) le long de ladite surface et, en plus du courant de particules à mousser, un courant de gaz qui traverse la surface frontale supérieure (6) pouvant être forcé de haut en bas à travers la cuve de four (1) afin d'éviter les adhérences dans la cuve de four (1),
**caractérisé en ce que**
pour l'amenée des particules à mousser du produit en vrac et l'arrivée de gaz dans la partie supérieure de la cuve de four (1), des amenées séparées sont présentes dans la surface frontale supérieure (6) de la cuve de four (1), les ouvertures pour l'amenée des particules à mousser étant plus éloignées de la surface (2) de la cuve de four (1) que les ouvertures (8) pour l'amenée du gaz.

2. Four à cuve selon la revendication 1, **caractérisé en ce que** le gaz amené dans la partie supérieure de la cuve de four (1) est chauffé - mesuré en °C - à au moins 50 % de la température maximale qui règne dans la cuve de four (1).

3. Four à cuve selon la revendication 1 ou la revendication 2, **caractérisé en ce que** plusieurs ouvertures (8) pour l'amenée du gaz à la surface frontale supérieure (6) de la cuve de four (1) sont disposées le long du bord de la surface (2) de la cuve de four autour d'une ouverture pour l'amenée de particules à mousser.

4. Four à cuve selon l'une des revendications 1 à 3, **caractérisé en ce que** la surface (2) de la cuve de four (1) présente de nombreuses petites ouvertures (9) réparties sur sa surface, par lesquelles la cuve de four (1) est en communication fluidique avec une fente annulaire (3) dans laquelle sont disposées les sources de chaleur (4) et qu'il règne dans la fente annulaire (3) une pression plus élevée que dans la cuve de four (1).

5. Four à cuve selon la revendication 4, **caractérisé en ce que** la surface (2) de la cuve de four (1) est formée de plusieurs surfaces partielles en vitrocéramique et que les ouvertures (9) de la surface s'étendent le long de surfaces de contact entre de telles surfaces partielles adjacentes.

6. Four à cuve selon l'une des revendications 1 à 5, **caractérisé en ce que** la face frontale inférieure ouverte de la cuve de four (1) débouche dans une conduite (12) qui est soumise à une pression d'aspiration.
